# EUROPÄISCHE PATENTSCHRIFT

(11) **EP 1 520 382 B1**
(45) Veröffentlichungstag und Bekanntmachung des Hinweises auf die Patenterteilung: **14.01.2009**
(21) Anmeldenummer: 03761422.9
(22) Anmeldetag: 20.06.2003
(51) Int. Cl.: H04L 25/45, B60R 16/02

(54) **VERFAHREN UND VORRICHTUNG ZUR DATENÜBERTRAGUNG**
METHOD AND DEVICE FOR DATA TRANSMISSION
PROCEDE ET DISPOSITIF DE TRANSMISSION DE DONNEES

(30) Priorität: 27.06.2002 DE 10228905
(43) Veröffentlichungstag der Anmeldung: 06.04.2005
(73) Patentinhaber: ROBERT BOSCH GMBH, 70442 Stuttgart (DE)
(72) Erfinder: GUENTHER, Uwe, 71154 Nufringen (DE); KIRSCHNER, Manfred, 70197 Stuttgart (DE); AUE, Axel, 70825 Korntal-Muenchingen (DE)
(86) Internationale Anmeldenummer: PCT/DE2003/002070
(87) Internationale Veröffentlichungsnummer: WO 2004/004261

(56) Entgegenhaltungen:
- EP-A- 0 245 616
- EP-A- 0 404 986
- EP-A- 0 521 677
- DE-A- 3 445 617
- DE-A- 4 407 948
- US-A- 4 409 587
- US-A- 4 532 557

## Beschreibung

### Stand der Technik

Die Erfindung geht aus von einem Verfahren und einer Vorrichtung zur seriellen Datenübertragung zwischen einem ersten und einem zweiten Teilnehmer gemäß den Oberbegriffen der unabhängigen Ansprüche.

Dazu zeigt die DE 34 45 617 A1 ein Verfahren und eine Anordnung zur seriellen Übertragung der digitalen Messwerte eines Messwertwandlers. Darin sind Schieberegister bekannt, die eine Parallel/Seriell-Wandlung vornehmen, um die Informationen zu übertragen. Dabei handelt es sich um einen diskreten Baustein bzw. diskrete Bausteine, die von einer Logik bzw. Steuerung gesteuert werden müssen. D.h., die Verarbeitungseinheit selbst bzw. die CPU, insbesondere des sendenden Teilnehmers, wird durch die Übertragung belastet. Im genannten Stand der Technik steuert somit die Verarbeitungseinheit oder CPU durch eine spezielle Taktimpulsfolge die Datenübertragung (vgl. auch SPI-Interface bzw. SCI-Interface).

Dabei zeigt die DE 197 33 748 A1 eine Datenübertragungsvorrichtung über eine serielle Schnittstelle, mit einer Parallel/Seriell Umwandlungseinrichtung auf der Sendeseite und einer Seriell/Parallel Umwandlungseinrichtung auf der Emfängerseite. Bei dieser Übertragung werden vollständige Übertragungsrahmen definiert. Diese Rahmen enthalten 8 Datenbit, Startbit und Stopbit sowie Parity bit und sind somit immer 1 bit breit und werden getaktet durchgeschoben. Dazu ist ein Synchronisierungsimpuls erforderlich, um nach den 11 bit des Rahmens erneut auf den nächsten Rahmen zu synchronisieren.

Die EP 0 521 677 B1 betrifft ein Parallel/Seriell Datenwandlungssystem zum Übertragen Bündel-serieller Daten aus empfangenen parallelen Daten. Dabei werden parallele Daten aus einer CPU in einen Puffer geladen und von dort zu einem Schieberegister geleitet. Der Puffer liefert ein Leer-Flag, wenn keine parallelen Daten mehr darin gespeichert sind. Dann gibt ein nachgeschaltetes Schieberegister gemäß einer vorgegebenen Taktanzahl entsprechende serielle Daten aus. Abhängig von dem Leer-Flag werden dann neue Daten gepuffert und dem Schieberegister zugeleitet.

Für serielle Schnittstellen muss ein Busprotokoll implementiert werden, bzw. die Sende/Empfangsregister müssen von der CPU bedient werden. Darüber hinaus erfolgt bei den genannten seriellen Schnittstellen in der Regel eine Übertragung von Informationen, die nur geringen Zeitbezug aufweisen, also Probleme bezüglich der Echtzeitfähigkeit mit sich bringen. Es erfolgt somit keine harte Kopplung von der CPU Zeitbasis (timebase) zum Pinstatus.

Somit zeigt sich, dass der Stand der Technik nicht in jeder Hinsicht optimale Ergebnisse zu liefern vermag. Es stellt sich somit die Aufgabe, eine serielle Datenübertragung zu realisieren, bei welcher einerseits die CPU nicht belastet wird und zum anderen trotzdem die Echtzeitfähigkeit garantiert werden kann.

### Vorteile der Erfindung

Diese Aufgabe wird gelöst durch ein Verfahren und eine Vorrichtung zur seriellen Datenübertragung zwischen einem ersten und einem zweiten Teilnehmer, wobei der erste Teilnehmer wenigstens zwei Signale auf zwei Signalpfaden unidirektional zu dem zweiten Teilnehmer überträgt und in jedem Teilnehmer ein Schieberegister vorgesehen ist, wobei die zwei Signalpfade des ersten Teilnehmers parallel in ein Schieberegister geführt werden und die Datenübertragung zu dem zweiten Teilnehmer durch eine automatische Taktung der Schieberegister aus einer Zeitbasis erfolgt.

D.h., bei einem Teilnehmer, insbesondere einem µController, dass dieser Schaltungsteile integriert hat, die es erlauben, Echtzeitsignale ohne CPU-Interaktion zu übertragen. Beispiele für solch Echtzeitsignale sind hier Zündung, Einspritzung und digitale Ausgänge von Sensoren, welche die Information z.B. über ein pulsweitenmoduliertes Signal an den Endstufen-IC übertragen werden. Auf dem empfangenden Teilnehmer, beispielsweise einer Endstufe, sind die Leistungstreiber integriert, die durch die CPU-Einheiten auf einzelnen Signalleitungen angesteuert werden. Eine Integration der Schaltungsteile für die Echtzeitverarbeitung auf dem zweiten Teilnehmer, also insbesondere der Endstufe, bringt insofern Probleme mit sich, da diese Schaltungsteile in einem Bipolarprozess zur Herstellung sehr groß werden und auf dem µController im System selbst kostengünstiger darstellbar sind. Daneben ist in der Regel ohnehin eine serielle Schnittstelle vorhanden vom ersten zum zweiten Teilnehmer, insbesondere vom µController zu den Endstufen, über welche z.B. die Diagnose gelesen wird (SPI-Interface).

Üblicherweise erfüllt aber eine solche vorhandene Schnittstelle wie oben genannt keine Echtzeitanforderungen und damit wirft diese Probleme auf, die Informationen über die serielle Schnittstelle zu übertragen und damit auch eine Vielzahl an Pins, sowohl am Rechner als auch im zweiten Teilnehmer, zu sparen. Darüber hinaus würde aber ein Hinzufügen von Zeitgebern oder Timern im zweiten Teilnehmer zur Herstellung der Echtzeitfähigkeit die Systemkosten stark erhöhen und das System deutlich komplexer machen, insbesondere dadurch, dass die Schnittstelle zwischen CPU und Endstufe, also zwischen erstem und zweitem Teilnehmer, eine zusätzliche Latenzzeit aufweist. Vorteilhafterweise wird nun ein Schieberegister eingesetzt, von welchem die serielle, insbesondere die bereits vorhandene serielle Schnittstelle bedient werden kann, wobei die genannte automatische Taktung des Schieberegisters aus einer Zeitbasis, insbesondere des ersten Teilnehmers, derart erfolgt, dass dem Schieberegister ein Taktsignal der Zeitbasis zugeführt wird und das Schieberegister mit diesem Taktsignal automatisch die Daten überträgt. Damit erfolgt im Gegensatz zum Stand der Technik keine Softwaregetriggerte serielle Datenübertragung, sondern durch einen kontinuierlichen Hardware-Trigger aus genannter Zeitbasis, insbesondere einem Zeitgeberbaustein, welcher automatisch in festen Abständen ein Zeitsignal erzeugt und damit den Takt für die Datenübertragung generiert. Da hierfür auch ein bereits vorhandener Zeitgeberbaustein verwendet werden kann, ist mit Hinzufügung der Schieberegister und der Umleitung der Signalpfade eine einfache Möglichkeit gegeben, ohne Software-Aufwand sowie ohne CPU-Belastung eine Vielzahl von Signalen statt parallel über eine vorhandene serielle Schnittstelle zu übertragen und trotzdem die benötigten Echtzeitforderungen zu erfüllen.

Dies wird auch dadurch erreicht, dass die automatische Taktung mit einer Taktrate erfolgt, die wenigstens doppelt so hoch ist wie eine Signalrate, welche sich aus der Auflösung des Signals der wenigstens zwei Signale ergibt, das die höhere Auflösung besitzt.

In einer weiteren Ausführungsform kann die automatische Taktung und damit die Taktrate insbesondere so vorgegeben werden, dass sich die aus der Taktrate ergebende Taktzeit gleich oder kleiner als eine Flankenzeit der zu übertragenden Signale ergibt. D.h., dass bei einer steigenden oder fallenden Flanke eines Signals dieser Pegelwechsel in jedem Falle durch den Schieberegistertakt im Rahmen der seriellen Datenübertragung erfasst wird.

Vorteilhafterweise weisen dabei die wenigstens zwei Signale jeweils einen High-Signalpegel und einen Low-Signalpegel auf, wobei die High-Signalpegel und die Low-Signalpegel der wenigstens zwei Signale jeweils innerhalb vorgebbarer Toleranzen gleich sind. Dies deshalb, da die Signale parallel dem Schieberegister zugeführt werden und damit je Registerzelle nach der seriellen Übertragung die High- oder Low-Signalerfassung vereinfacht ermöglicht wird.

Weitere Vorteile und vorteilhafte Ausgestaltungen ergeben sich aus der nachfolgenden Beschreibung sowie den Merkmalen der Ansprüche.

### Zeichnung

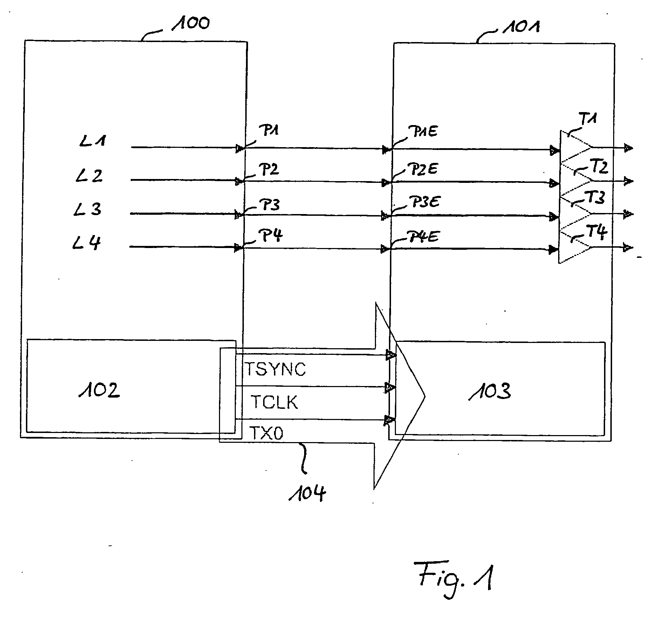

Die Erfindung wird im Weiteren anhand der in der Zeichnung dargestellten Figuren näher erläutert.
Dabei zeigt Figur 1 eine Standardanordnung mit zwei Teilnehmern und parallelen Signalpfaden zur Datenübertragung.
Figur 2 zeigt eine erfindungsgemäße serielle Datenübertragung unter erfindungsgemäßem Einsatz der Schieberegister sowie der Zeitbasis.
In Figur 3 ist der Zusammenhang zwischen serieller Übertragung durch die Schieberegister und Zeitbasis nochmals dargestellt.
Figur 4, bestehend aus Figur 4a und 4b, zeigt Signalverläufe zur Verdeutlichung des Übertragungsverhaltens.

### Beschreibung der Ausführungsbeispiele

Figur 1 zeigt einen ersten Teilnehmer 100 und einen zweiten Teilnehmer 101, insbesondere einen µController 100 bzw. eine Steuereinheit und eine Endstufe 101. Darin werden über Leitungen L1 bis L4 Signale an die Leistungstreiber T1 bis T4 der Endstufe 101 übertragen. Durch die parallele Übertragung sind beim ersten Teilnehmer 100 Pins P1 bis P4 und bei der Endstufe 101 Pins P1E bis P4E nötig. Die dabei an die Leistungstreiber T1 bis T4 übertragenen Signale sind wie vorher schon genannt beispielsweise ohne CPU-Interaktion zu verarbeitende Echtzeitsignale wie Zündung, Einspritzung und digitale Sensorausgänge im Rahmen einer Motorsteuerung. Gleichzeitig ist eine serielle Schnittstelle 104 mit einem Sendeteil 102 und einem Empfangsteil 103 dargestellt, vom µController zu den Endstufen 101, über die beispielsweise die Diagnose gelesen wird.

Aus Gründen der Übersichtlichkeit sind hier vier Übertragungswege der Signale L1 bis L4 mit Pins P1 bis P4 bzw. P1 E bis P4E und Treiberbausteinen T1 bis T4 dargestellt.

Natürlich ist die Erfindung bei beliebiger insbesondere größeren Anzahl der Übertragungswege (z. B. 20 bis 30) gleichermaßen einsetzbar, wobei je höher diese Anzahl der Übertragungswege und damit die Pinanzahl wäre, desto größer ist der Vorteil, insbesondere der Kostenvorteil, der sich aus dieser erfindungsgemäßen Pineinsparung ergibt

Die Herausforderung ist nun die, über eine serielle Schnittstelle die Informationen unter Echtzeitgesichtspunkten zu übertragen und damit zum einen die vielen Pins P1 bis P4 und P1E bis P4E zu sparen und gleichzeitig die CPU (Central Processing Unit) des µControllers 100 zu entlasten.

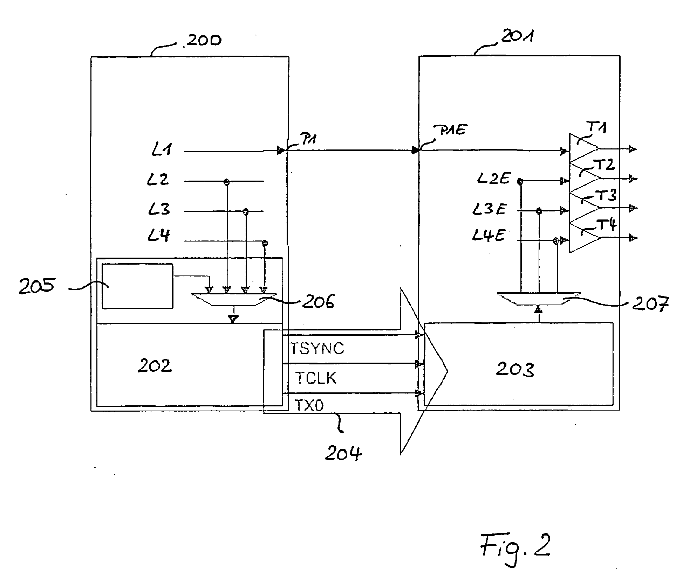

Dies ist erfindungsgemäß durch Figur 2 realisierbar. Dabei ist vorgesehen, ein serielles Schieberegister 206, das µControllerintern von den Timerausgängen angesteuert wird, einzusetzen, um die Parallel/Seriell-Wandlung durchzuführen. Dabei wird der Takt für das Schieberegister so hoch gewählt, dass eine bestimmte Anzahl an Bits in sehr kurzer Zeit übertragen werden können. Beispielsweise 16 Bit in 1 µs. In der Endstufe 201 findet dann wieder eine Parallel/Seriell-Wandlung statt, wodurch mit dem gewandelten Signal die Endstufen-Transistoren T1 bis T4 in dem Endstufentyp angesteuert werden können. D.h., die Taktzeit ist die Zeit, die erforderlich ist, um alle Zellen des Schieberegisters einmal zu übertragen bzw. durchzuschieben.

Im genannten Beispiel in Figur 2 werden somit die Pins P2 bis P4 und P2E bis P4E gespart, wobei prinzipiell auch eine Einsparung des Pins P1 und P1E ebenfalls erfindungsgemäß möglich ist, indem die Signalpfade L2 bis L4 dem Schieberegister 206 zugeleitet werden. Des Weiteren werden dem Schieberegister die Zeitsignale der Zeitbasis 205, insbesondere eines Zeitgeberbausteins, zugeführt. Das Schieberegister 206 selbst hat dann wieder eine Verbindung zum Sendebaustein 202 der seriellen Schnittstelle 204, über welche dann der Dateninhalt des Schieberegisters seriell zum Empfangsbaustein 203 übertragen wird. Dieser gibt diese Daten an das Schieberegister 207 in der Endstufe 201 aus, von wo aus sie über Leitungen L2E, L3E und L4E, also quasi die umgeleiteten Signalpfade, an die Treiberbausteine T2 bis T4 übertragen werden. Dabei entspricht die serielle Schnittstelle 204 ebenso wie 104 einer üblichen Schnittstelle, über die ein Synchronisationssignal TSYNC, eine Clock TCLK sowie das eigentliche Signal über die Übertragungsverbindung TX0 übertragen werden.

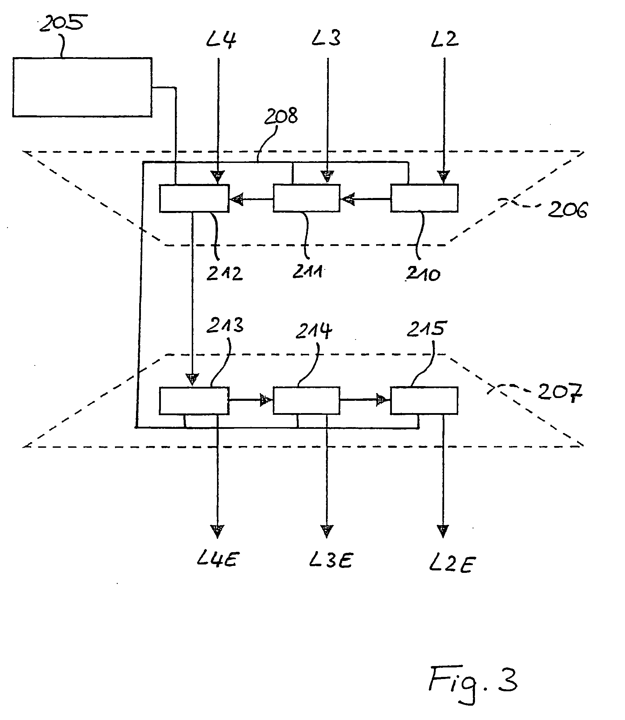

Figur 3 zeigt nochmals angedeutet und symbolisch vereinfacht dargestellt die Schieberegister 206 und 207 mit jeweils drei Registerzellen 210 bis 212 und 213 bis 215. Dabei gehen die Signalpfade L2 bis L4 des ersten Teilnehmers 200 entsprechend in die Registerzellen 210 bis 212, wobei die übertragenen Signale dann aus den Registerzellen 213 bis 215 via der Signalpfade L4E, L3E und L2E an die Treiberbausteine ausgegeben werden. Mit 205 ist wieder die Zeitbasis bzw. der Zeitgeberbaustein dargestellt, welcher mit den Registerzellen verbunden ist und damit den automatischen Takt zur Weiterreichung der Registerzelleninhalte ermöglicht und generiert. Als Zeitgeberbaustein wird beispielsweise ein Quarz oder ein Voltage-Controll-Oscillator VCO oder ähnliches eingesetzt, welcher durch einen nachgeschalteten Zählerbaustein oder Counter auch einstellbar bezüglich des ausgegebenen Taktes realisiert werden kann. Somit werden die Signalpfade über die genannten Register 206 und 207 bzw. die entsprechenden Registerzellen 210 bis 215 geführt. Durch diese direkte Verbindung der Timerausgänge mit dem Schieberegister ist somit keine Software-Interaktion mehr notwendig und damit auch keine Performance, insbesondere CPU-Performance, aufzuwenden. Es erfolgt also keine Software-Triggerung, sondern eine direkte Art der Triggerung aus einer Zeitbasis. Dadurch ergibt sich auf einer entsprechenden Leiterplatte durch die geringere Anzahl der Verbindungen auch eine geringere Entflechtungsfläche.

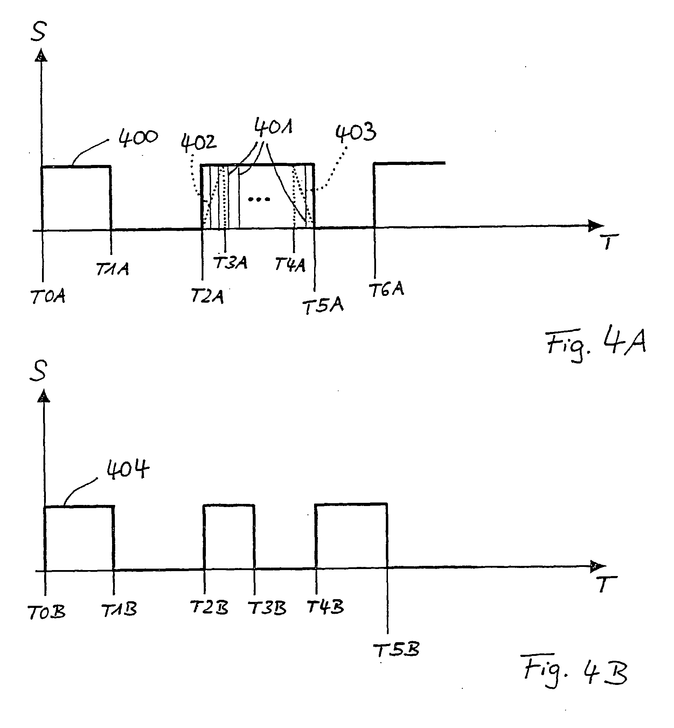

Anhand der Figur 4, bestehend aus den Figuren 4a und 4b, soll nun nochmals das Übertragungsverhalten, insbesondere die sich daraus ergebenden Vorteile, erläutert werden. Dazu sind in Figur 4a und 4b zwei Signalverläufe 400 und 404 über der Zeit dargestellt. Signal 400 zeigt ein pulsweitenmoduliertes Signal mit festen Zeitfenstern von T0A bis T2A und von T2A bis T6A, in welchen pulsweitenmodulierte Signale übertragen werden. So ergibt sich von T0A bis T1A ein High-Signalpegel und von T1A bis T2A ein Low-Signalpegel sowie von T2A bis T5A ein High-Signalpegel und von T5A bis T6A ein Low-Signalpegel. Dieses Signal liegt beispielsweise über Signalpfad L4 am Schieberegister an. Die notwendige Taktrate ergibt sich nun aus der Breite der Zeitfenster und der entsprechenden Auflösung. Wird beispielsweise mit 8 Bit aufgelöst, so erhält man Abtastabschnitte, die der Zeitfensterbreite geteilt durch 2⁸, also 256, entsprechen. Die automatische Taktung bzw. die entsprechende Taktrate ist nun so vorzusehen, dass die Flankenwechsel, beispielsweise bei T2A und T5A sicher erkannt bzw. übertragen werden können. Die Auflösung ist durch die Einteilungen 401 dargestellt. Kann dann noch von einer Flanke 402 oder 403 ausgegangen werden, wie hier zwischen T2A und T3A sowie T4A und T5A dargestellt, so muss die Taktzeit so gewählt werden, dass die Flanke sicher erkannt werden kann, also die sich aus der Taktrate ergebende Taktzeit wenigstens gleich oder kleiner als die Flankenzeit, also T2A bis T3A bzw. T4A bis T5A, ist.

Wird, wie in Figur 4b, von einem variablen Zeitfenster von T0B bis T5B oder einem Zeitfenster mit mehr Informationsgehalt als einem Flankenwechsel oder zwei Flankenwechseln ausgegangen, wie Signal 404, so wird die Taktrate deutlich höher gewählt, so wie im Beispiel genannt, eben 16 Bit in 1 µs. Dadurch ändert sich dann das Systemverhalten an den Steuergerätepins bzw. den Controllerpins nicht, da die Updaterate der Information mit 1 µs unter der spezifizierten Slew Rate, typischerweise beispielsweise 10 V/µs liegt.

Die Signale L1 - Lx sind in den Beispielen Synonyme für Pads/Pins des µControllers. Dadurch wird die übliche parallele Übertragung in eine serielle gewandelt, ohne die CPU zusätzlich zu belasten und unter Verwendung der auf dem µController integrierten Peripheriemodule.

Da bei µControllern in neuen Siliziumtechnologien die Chipgrößen immer kleiner, bedingt durch geringere Strukturabmessungen, auf der anderen Seite die Anzahl der implementierten Funktionen wächst (die auch Ausgangspins benötigen), wird der Padabstand immer kleiner. Da zu geringe Padabstände nicht mehr mit der Bondtechnik verarbeitt werden können, gibt es zwei Lösungen:

Zum Einen das Chip größer machen und damit alle Pads in entsprechend verarbeitbarem Raster anordnen, was allerdings zu Mehrkosten führt, die in der Regel nicht akzeptabel sind. Erfindungsgemäß wird wie beschrieben die Reduktion der Anzahl der Pins durchgeführt, ohne die Funktionalität zu verringern. Durch diese Anwendung der Erfindung können die genannten Vorteile erzielt werden.

## Patentansprüche

1. Verfahren zur seriellen Datenübertragung zwischen einem ersten und einem zweiten Teilnehmer, wobei der erste Teilnehmer wenigstens zwei Signale auf wenigstens zwei Signalpfaden unidirektional zu dem zweiten Teilnehmer überträgt, wobei in jedem Teilnehmer ein Schieberegister mit wenigstens zwei Registerzellen vorgesehen ist, wobei die wenigstens zwei Signale auf den wenigstens zwei Signalpfaden des ersten Teilnehmers parallel in das Schieberegister in je eine der wenigstens zwei Registerzellen eingegeben werden und die Datenübertragung zu dem zweiten Teilnehmer aus dem ersten Teilnehmer über eine serielle Verbindung zwischen den Schiebregistern erfolgt, **dadurch gekennzeichnet, dass** die Anzahl der Registerzellen jedes Schieberegisters der Anzahl der Signalpfade entspricht und die Schieberegister durch eine Zeitbasis automatisch getaktet werden, indem die Zeitbasis direkt mit den Registerzellen verbunden ist und diese taktet, wobei ein Zählerbaustein zur Zählung der Takte vorgesehen ist, so dass eine Übertragung und Weiterverarbeitung der Signale in Echtzeit erfolgt, und die Signale aus den Registerzellen des zweiten Teilnehmers entsprechend der gezählten Anzahl der Registerzellen parallel ausgegeben werden.

2. Verfahren nach Anspruch 1, **dadurch gekennzeichnet, dass** die automatische Taktung der Schieberegister aus einer Zeitbasis des ersten Teilnehmers derart erfolgt, dass dem Schieberegister ein Taktsignal der Zeitbasis zugeführt wird und das Schieberegister mit diesem Taktsignal automatisch die Daten überträgt.

3. Verfahren nach Anspruch 1, **dadurch gekennzeichnet, dass** die automatische Taktung mit einer Taktrate erfolgt, die wenigstens doppelt so hoch ist, wie eine Signalrate, welche sich aus der Auflösung des Signals der wenigstens zwei Signale ergibt, das die höhere Auflösung besitzt.

4. Verfahren nach Anspruch 1, **dadurch gekennzeichnet, dass** die Signale als pulsweitenmodulierte Signale vorliegen.

5. Verfahren nach Anspruch 1, **dadurch gekennzeichnet, dass** die wenigstens zwei Signale jeweils einen High-Signalpegel und einen Low-Signalpegei aufweisen, wobei die High-Signalpegel und die Low-Signalpegel der wenigstens zwei Signale jeweils innerhalb vorgebbarer Toleranzen gleich sind.

6. Verfahren nach Anspruch 1, **dadurch gekennzeichnet, dass** die automatische Taktung mit einer Taktrate erfolgt und die sich aus der Taktrate ergebende Taktzeit gleich oder kleiner ist als eine Flankenzeit der zu übertragenen Signale.

7. Vorrichtung zur seriellen Datenübertragung zwischen einem ersten (200) und einem zweiten (201) Teilnehmer, wobei der erste Teilnehmer wenigstens zwei Signale auf wenigstens zwei Signalpfaden (L1-L4) unidirektional zu dem zweiten Teilnehmer überträgt, wobei in jedem Teilnehmer ein Schieberegister (206, 207) mit wenigstens zwei Registerzellen (210-215) vorgesehen ist, wobei die wenigstens zwei Signale auf den wenigstens zwei Signalpfaden des ersten Teilnehmers parallel in das Schieberegister in je eine der wenigstens zwei Registerzellen eingegeben werden und die Datenübertragung zu dem zweiten Teilnehmer aus dem ersten Teilnehmer über eine serielle Verbindung zwischen den Schiebregistern erfolgt, **dadurch gekennzeichnet, dass** die Anzahl der Registerzellen jedes Schieberegisters der Anzahl der Signalpfade entspricht und die Schieberegister durch eine Zeitbasis (205) automatisch getaktet werden, indem die Zeitbasis direkt mit den Registerzellen verbunden ist und diese taktet, wobei ein Zählerbaustein zur Zählung der Takte vorgesehen ist, so dass eine Übertragung und Weiterverarbeitung der Signale in Echtzeit erfolgt, und die Signale aus den Registerzellen des zweiten Teilnehmers entsprechend der gezählten Anzahl der Registerzellen-parallel ausgegeben werden.

8. Vorrichtung nach Anspruch 7, **dadurch gekennzeichnet, dass** als Zeitbasis ein Zeitgeberbaustein vorgesehen ist, welcher automatisch in festen Abständen ein Zeitsignal erzeugt.

## Claims

1. Method for serial data transmission between a first subscriber and a second subscriber, the first subscriber transmitting at least two signals in at least two signal paths in a unidirectional manner to the second subscriber, a shift register having at least two register cells being provided in each subscriber, the at least two signals in the at least two signal paths of the first subscriber being input to a respective one of the at least two register cells of the shift register in a parallel manner, and the data being transmitted from the first subscriber to the second subscriber by means of a serial connection between the shift registers, **characterized in that** the number of register cells in each shift register corresponds to the number of signal paths, and the shift registers are automatically clocked by means of a time base by virtue of the time base being directly connected to the register cells and clocking the latter, a counter module being provided for the purpose of counting the clock pulses, with the result that the signals are transmitted and processed further in real time, and the signals are output from the register cells of the second subscriber in a parallel manner in a fashion corresponding to the counted number of register cells.

2. Method according to Claim 1, **characterized in that** the shift registers are automatically clocked from a time base of the first subscriber in such a manner that a clock signal of the time base is supplied to the shift register and the shift register uses this clock signal to automatically transmit the data.

3. Method according to Claim 1, **characterized in that** the automatic clocking is effected at a clock rate which is at least twice as high as a signal rate which results from the resolution of that signal of the at least two signals which has the higher resolution.

4. Method according to Claim 1, **characterized in that** the signals are in the form of pulse-width-modulated signals.

5. Method according to Claim 1, **characterized in that** the at least two signals each have a high signal level and a low signal level, the high signal levels and the low signal levels of the at least two signals respectively being the same within predefinable tolerances.

6. Method according to Claim 1, **characterized in that** the automatic clocking is effected at a clock rate, and the clock time resulting from the clock rate is less than or equal to an edge time of the signals to be transmitted.

7. Device for serial data transmission between a first subscriber (200) and a second subscriber (201), the first subscriber transmitting at least two signals in at least two signal paths (L1-L4) in a unidirectional manner to the second subscriber, a shift register (206, 207) having at least two register cells (210-215) being provided in each subscriber, the at least two signals in the at least two signal paths of the first subscriber being input to a respective one of the at least two register cells of the shift register in a parallel manner, and the data being transmitted from the first subscriber to the second subscriber by means of a serial connection between the shift registers, **characterized in that** the number of register cells in each shift register corresponds to the number of signal paths, and the shift registers are automatically clocked by means of a time base (205) by virtue of the time base being directly connected to the register cells and clocking the latter, a counter module being provided for the purpose of counting the clock pulses, with the result that the signals are transmitted and processed further in real time, and the signals are output from the register cells of the second subscriber in a parallel manner in a fashion corresponding to the counted number of register cells.

8. Device according to Claim 7, **characterized in that** a timer module is provided as the time base and automatically generates a time signal at fixed intervals.

## Revendications

1. Procédé de transmission de données en série entre un premier et un deuxième abonné, le premier abonné transmettant au moins deux signaux sur au moins deux chemins de signal de manière unidirectionnelle vers le deuxième abonné, un registre à décalage comprenant au moins deux cellules de registre étant prévu au niveau de chaque abonné, les au moins deux signaux sur les au moins deux chemins de signal du premier abonné étant introduits en parallèle dans le registre à décalage respectivement dans l'une des au moins deux cellules de registre et la transmission de données au deuxième abonné depuis le premier abonné s'effectuant par le biais d'une liaison série entre les registres à décalage, **caractérisé en ce que** le nombre de cellules de registre de chaque registre à décalage correspond au nombre de chemins de signal et les registres à décalage sont cadencés automatiquement par une base de temps, **en ce que** la base de temps est reliée directement avec les cellules de registre et cadence celles-ci, un composant compteur étant prévu pour compter les cycles de sorte qu'une transmission et un traitement postérieur des signaux s'effectuent en temps réel et les signaux provenant des cellules de registre du deuxième abonné sont délivrés en parallèle conformément au nombre de cellules de registre comptées.

2. Procédé selon la revendication 1, **caractérisé en ce que** le cadencement automatique du registre à décalage à partir d'une base de temps du premier abonné s'effectue de telle sorte qu'un signal de cycle de la base de temps est acheminé au registre à décalage et le registre à décalage transmet automatiquement les données avec ce signal de cycle.

3. Procédé selon la revendication 1, **caractérisé en ce que** le cadencement automatique s'effectue à une fréquence de cycle qui est au moins égale au double d'une fréquence de signal qui résulte de la résolution du signal des au moins deux signaux qui possède la résolution la plus élevée.

4. Procédé selon la revendication 1, **caractérisé en ce que** les signaux se présentent sous la forme de signaux modulés en largeur d'impulsion.

5. Procédé selon la revendication 1, **caractérisé en ce que** les au moins deux signaux présentent respectivement un niveau de signal haut et un niveau de signal bas, le niveau de signal haut et le niveau de signal bas des au moins deux signaux étant à chaque fois égaux au sein de tolérances pouvant être prédéfinies.

6. Procédé selon la revendication 1, **caractérisé en ce que** le cadencement automatique s'effectue à une fréquence de cycle et le temps de cycle qui résulte de la fréquence de cycle est égal ou inférieur à un temps de front des signaux à transmettre.

7. Dispositif de transmission de données en série entre un premier (200) et un deuxième (201) abonné, le premier abonné transmettant au moins deux signaux sur au moins deux chemins de signal (L1 - L4) de manière unidirectionnelle vers le deuxième abonné, un registre à décalage (206, 207) comprenant au moins deux cellules de registre (210 - 215) étant prévu au niveau de chaque abonné, les au moins deux signaux sur les au moins deux chemins de signal du premier abonné étant introduits en parallèle dans le registre à décalage respectivement dans l'une des au moins deux cellules de registre et la transmission de données au deuxième abonné depuis le premier abonné s'effectuant par le biais d'une liaison série entre les registres à décalage, **caractérisé en ce que** le nombre de cellules de registre de chaque registre à décalage correspond au nombre de chemins de signal et les registres à décalage sont cadencés automatiquement par une base de temps (205), **en ce que** la base de temps est reliée directement avec les cellules de registre et cadence celles-ci, un composant compteur étant prévu pour compter les cycles de sorte qu'une transmission et un traitement postérieur des signaux s'effectuent en temps réel et les signaux provenant des cellules de registre du deuxième abonné sont délivrés en parallèle conformément au nombre de cellules de registre comptées.

8. Dispositif selon la revendication 7, **caractérisé en ce que** la base de temps prévue est un composant générateur d'horloge qui génère automatiquement un signal d'horloge à intervalles fixes.
